Europäisches Patentamt

(19) European Patent Office

Office européen des brevets

(11) Numéro de publication: **0 078 229**
**B1**

(12) **FASCICULE DE BREVET EUROPEEN**

(45) Date de publication du fascicule du brevet: **30.01.91**

(51) Int. Cl.⁵: **G 06 F 12/10**, G 06 F 13/00

(21) Numéro de dépôt: **82402003.6**

(22) Date de dépôt: **28.10.82**

(54) Ensemble de gestion de la mémoire d'un processeur.

(30) Priorité: **28.10.81 FR 8120247**

(43) Date de publication de la demande:
**04.05.83 Bulletin 83/18**

(45) Mention de la délivrance du brevet:
**30.01.91 Bulletin 91/05**

(84) Etats contractants désignés:
**CH DE GB IT LI NL SE**

(56) Documents cités:
**FR-A-2 276 636        GB-A-2 025 097**
**FR-A-2 337 373**
**COMPUTER, vol. 10, no. 5, mai 1977, pages 68-74, Longbeach (USA);POPPENDIECK et al.: "Memory extension techniques for minicomputers"**
**IBM TECHNICAL DISCLOSURE BULLETIN, vol. 18, no. 1, juin 1975, page 254, New York (USA); SMITH: "Translator for virtual segment addresses"**
**ELECTRONICS, 11.08.1981, pages 119-127, JOHNSON: "Microsystems exploit mainframe methods"**
**ELECTRONIC DESIGN, 19.02.1981, pages 155-162, MATEOSIAN: "Segmentation advances micro-C memory addressing"**

(73) Titulaire: **ETAT FRANCAIS représenté par le Ministre des PTT (Centre National d'Etudes des Télécommunications)**
**38-40 rue du Général Leclerc**
**F-92131 Issy-les-Moulineaux (FR)**

(73) Titulaire: **INSTITUT NATIONAL DE RECHERCHE EN INFORMATIQUE ET EN AUTOMATIQUE**
**Domaine de Voluceau Rocquencourt**
**F-78150 Le Chesnay (FR)**

(72) Inventeur: **Finger, Ulrich**
**30, rue du Moulin de Pierre**
**F-92140 Clamart (FR)**
Inventeur: **Ligneres, Pierre**
**80, Bis rue des Mu7res**
**F-92160 Antony (FR)**
Inventeur: **O'Donnell, Ciaran**
**11, rue Saint Christophe**
**F-75015 Paris (FR)**

(74) Mandataire: **Mongrédien, André et al**
**c/o BREVATOME 25, rue de Ponthieu**
**F-75008 Paris (FR)**

Courier Press, Leamington Spa, England.

**Description**

La présente invention concerne un ensemble de gestion de la mémoire d'un processeur ou d'un microprocesseur. Elle s'applique à la gestion des mémoires de processeurs ou de microprocesseurs de types variés, à partir du concept connu de segmentation et pagination.

On sait que les processeurs et plus particulièrement les microprocesseurs, atteignent actuellement des performances de traitement très élevées. Ces performances résultent principalement des progrès technologiques mais également de l'évolution des ensembles qui permettent de gérer les mémoires qui atteignent des capacités très élevées, pour un encombrement réduit.

On sait qu'un ensemble de gestion de la mémoire d'un processeur ou d'un microprocesseur est un interface qui est situé entre ce processeur et la ou les mémoires physiques qui lui sont associées, cet ensemble gérant l'adressage de la mémoire. Ces ensembles de gestion de mémoire existent déjà dans les processeurs de forte puissance, mais ils nécessitent une quantité très importante de composants logiques.

Pour un microprocesseur ou microordinateur auquel est associée une mémoire de faible capacité (64 K. octets par exemple) ou n'utilise pas, en général d'ensemble de gestion de mémoire. En effet, dans les microprocesseurs ou micro-ordinateurs, l'espace adressable est très faible et le code d'instruction n'est pas prévu pour être indépendant de l'implantation des données en mémoire.

Par contre, pour les microprocesseurs, les plus récents qui sont associés à des mémoires présentant une capacité très importante (entre 1 et 16 Megaoctets), une gestion des adresses en mémoire est souhaitable. Cette gestion devient tout à fait indispensable lorsque plusieurs processeurs ou microprocesseurs sont connectés entre eux de manière à former un système multiprocesseur; dans ce cas les ensembles de gestion de mémoires permettent notamment de protéger les accès dans les zones de mémoire respectives de ces processeurs.

Les ensembles existants de gestion de mémoire permettent essentiellement une allocation dynamique des mémoires pendant l'exécution des programmes, la protection contre certains types d'accès (écriture ou lecture), la détection des erreurs pendant l'adressage, et l'utilisation des zones de mémoire communes par différents utilisateurs, sans perturbation du fonctionnement du processeur. Ces ensembles utilisent différentes techniques de gestion: la segmentation, la pagination ou une technique qui combine les deux techniques précédentes. La pagination utilise les espaces mémoire de même taille appelés pages, alors que la segmentation utilise des espaces de mémoire de tailles différentes appelés segments, un segment pouvant être contenu dans une page, ou recouvrir plusieurs pages.

Dans la technique de pagination, l'espace mémoire vu par l'utilisateur et le système d'exploitation est un espace linéaire pour lequel l'accès à la mémoire se fait par un seul nombre logique. Dans la segmentation, l'accès à la mémoire exige une paire de nombres (numéro du segment, et décalages ou offset). L'avantage principal de la pagination résulte de la facilité d'allocation des pages dans les mémoires puisque toutes ces pages ont toutes la même taille; cette technique présente cependant un inconvénient important, puisqu'elle nécessite une protection des différents espaces de la mémoire utilisateur, à cause du caractère linéaire de l'espace mémoire. La segmentation n'offre pas les mêmes difficultés de protection d'espaces mémoires, mais elle a par contre pour inconvénient, de compliquer l'implantation des segments dans l'espace mémoire.

Les techniques qui combinent à la fois la pagination et la segmentation présentent les avantages et inconvénients des deux autres techniques. Cependant quelle que soit la technique de gestion utilisée, les ensembles de gestion connus sont spécifiques du type de processeur et de microprocesseur utilisé. Il en résulte qu'il est pratiquement impossible d'utiliser un ensemble de gestion de mémoire fourni par un constructeur, avec un processeur ou un microprocesseur fourni par un autre constructeur.

La présente invention a pour but de remédier à ces inconvénients et notamment de réaliser un ensemble de gestion de la mémoire d'un processeur ou d'un microprocesseur, indépendant du type de ce processeur ou de microprocesseur utilisé. Elle a aussi pour but d'éviter les inconvénients liés aux techniques de pagination ou de segmentation et notamment de permettre:

une séparation de l'espace réservé aux opérations d'entrée-sortie et de l'espace mémoire utilisateur, dans l'ensemble de gestion lui-même, sans qu'il soit nécessaire, comme avec les ensembles de gestion existants, de diviser l'espace adressable de la mémoire commune par deux,

une séparation de l'espace local-commun dans l'ensemble de gestion lui-même. En effet, les ensembles de gestion connus sont conçus pour des structures classiques monoprocesseur et une implantation dynamique dans l'espace local n'est possible qu'en réservant un espace fixe pour toutes les mémoires locales. Ceci entraîne une complication importante pour la programmation ainsi qu'une limitation de l'espace adressable. Dans ces ensembles de gestion connus, il est donc nécessaire de réserver quelques e.b. pour l'espace local,

l'utilisation d'un grand nombre de registres de segmentation alors que dans les ensembles de gestion connus, le nombre de registres de segmentation est limité. De plus, lorsque ces ensembles commandent des mémoires associatives, la complexité de la gestion ne permet pas d'utiliser un grand nombre de registres de segmentation. Ceci entraîne une reprogrammation très fréquente des ensembles de gestion ou une utilisation de plusieurs ensembles de gestion en cascade.

D'une façon générale, les ensembles de gestion qui peuvent remédier partiellement aux inconvénients qui viennent d'être mentionnés, sont réalisés avec un nombre très important de boîtiers de circuits intégrés. La répartition des segments et la flexibilité d'adressage ne sont pas utilisées par la programmation car les algorithmes de gestion de mémoire sont trop complexes et, pour parvenir à cette flexibilité, il est nécessaire de compliquer le matériel de façon très importante (additionneurs pour les adressages), ce qui limite la performance des ensembles de gestion, en particulier à cause des additionneurs qui leur font perdre leur rapidité.

L'invention a donc aussi pour but, grâce à une technologie appropriée, de proposer un ensemble de gestion qui présente un nombre raisonnable de circuits et qui permet de gérer un nombre important de registres de segmentation. Ces différents buts sont atteints en combinant de manière particulière la pagination et la segmentation, cette combinaison permettant d'éviter dans l'invention l'utilisation d'additionneurs et comparateurs qui, dans les ensembles connus de gestion, entraînent des opérations complexes.

L'invention concerne un ensemble de gestion de la mémoire physique d'un processeur selon la partie précaractérisante de la revendication 1 et comprenant une table de registres descripteurs de segments, reliée au processeur et à des moyens pour transformer une adresse virtuelle fournie par le processeur en une adresse physique pour permettre l'exécution d'une tâche, à partir de segments et de pages réels contenus en mémoire physique, cette adresse virtuelle contenant au moins un numéro de page virtuelle, la valeur binaire d'un index de pointage du premier registre descripteur d'un segment physique en mémoire correspondant à une tâche à exécuter, et la valeur du décalage du début du segment physique, par rapport au début de la page réelle correspondante, un registre de base qui est chargé, pour chaque adresse virtuelle, par l'adresse de base du premier registre descripteur correspondant à la tâche à exécuter, les tâches à exécuter comportant des nombres différents de registres descripteurs, cette adresse de base étant chargée par le supervision, la table de registres descripteurs présentant des entrées qui sont reliées aux sorties d'un additionneur logique qui reçoit d'une part la valeur binaire de l'adresse de base du premier registre descripteur et, d'autre part, la valeur binaire de l'index correspondant à ce registre, les sorties de l'additionneur pointant l'une des entrées de la table de registres descripteurs, chaque registre descripteur contenant aussi des valeurs binaires relatives au moins à l'adresse de base du segment physique, à la base de la page dans laquelle est contenu le début de ce segment, ainsi que des valeurs binaires représentant la taille du segment physique. Un tel ensemble de gestion est connu de l'article de H. F. SMITH "Translator For Virtual Segment Addresses" dans IBM Technical Disclosure Bulletin, volume 18, no. 1, juin 1975, page 254.

L'invention est caractérisée en ce que l'un des registres descripteurs de la table contient des éléments binaires de contrôle chargé par le processeur et qui permettent à celui-ci de vérifier si pour le segment auquel le processeur doit accéder, ce processeur doit fonctionner en mode local ou global, s'il doit traiter une opération d'entrée-sortie ou un accès à la mémoire, l'ensemble de gestion comprenant des moyens constitués par une porte "OU" reliée à la table et au processeur pour former l'adresse physique de la page dans laquelle se trouve le début du segment physique, à partir du numéro de page virtuelle et de la valeur de la base de la page, des moyens constitués par une porte ET reliée à la table et au processeur, pour vérifier que le numéro de page virtuelle n'excède pas la taille du segment à exécuter, un registre de contrôle chargé par le superviseur, par des valeurs binaires indiquant le nombre maximum de registres descripteurs mis en jeu dans l'exécution de ladite tâche, et un comparateur relié au processeur et au registre de contrôle, pour comparer les valeurs binaires contenues dans le registre de contrôle et les valeurs binaires de l'index, ce comparateur appliquant un signal d'erreur au processeur lorsque la valeur de l'index est supérieure au nombre de registres descripteurs mis en jeu dans l'exécution de la tâche.

L'article de POPPENDIEK "Memory Extension Technique For Minicomputers" dans COMPUTER, volume 10, no. 5, mai 1977, pages 68—75, décrit encore des systèmes de gestions utilisant des segments à pages variables selon la partie précaractérisante de la revendication 1. Il est montré aussi que les registres descripteurs peuvent contenir des éléments de contrôle de l'accès à la mémoire.

Dans GB—A—2 025 097 est décrit un système de gestion de mémoire dans lequel, pour combiner une adresse de base à un déplacement, on remplace un additionneur par une porte OU sous conditions que des bits, correspondants à combiner ne soient pas simultanément "1" (condition ET).

Les caractéristiques et avantages de l'invention ressortiront mieux de la description qui va suivre, donnée en référence aux dessins annexés dans lesquels:

la figure 1 représente les différents formats d'adresse et de registres qui interviennent dans l'ensemble de l'invention,

la figure 2 représente schématiquement un ensemble de gestion de mémoire conforme à l'invention.

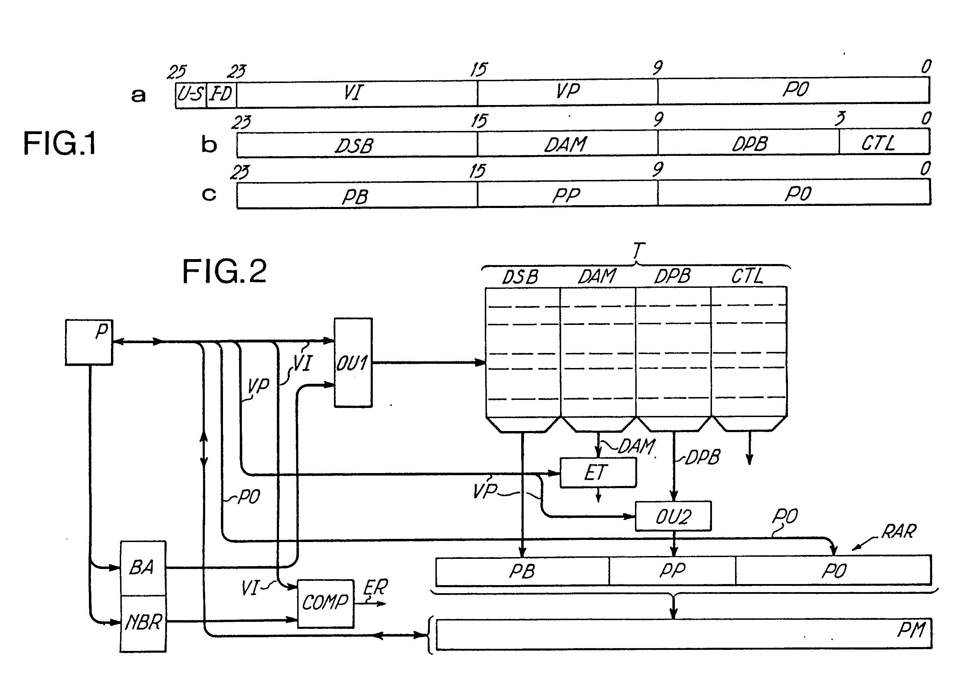

La figure 1 représente en (a) le format de l'adresse virtuelle fournie par le processeur, pour adresser une mémoire physique, grâce à l'ensemble de gestion de l'invention, qui sera décrit plus loin en détail. Ce format d'adresse virtuelle comprend des éléments binaires VP qui désignent le numéro de la page virtuelle dans laquelle se trouve un segment contenant des instructions ou des données auxquelles le processeur désire accéder pour exécuter une tâche déterminée; les éléments binaires VI correspondent à la valeur d'un index de pointage d'un registre descripteur de segments contenant toutes les informations nécessaires pour accéder en mémoire physique, à un segment physique d'exécution de la tâche donnée. Le format d'adresse virtuelle comprend aussi des éléments binaires PO concernant le décalage du début du segment physique, par rapport au début de la page réelle ou physique dans laquelle il est situé.

Enfin, le format d'adresse virtuelle peut également comprendre des éléments binaires U—S et I—D relatifs au type de segment auquel le processeur désire accéder en mémoire physique. L'élément binaire U—S indique s'il s'agit d'un segment qui intéresse l'utilisateur ou le superviseur du processeur, tandis que l'élément binaire I—D indique s'il s'agit d'un segment d'instructions ou d'un segment de données, en mémoire physique. Sur cette figure, les chiffres représentent les nombres d'éléments binaires mis en oeuvre dans le format d'adresse virtuelle décrit plus haut. Il est bien évident que ces nombres pourraient être différents.

La figure 1 représente en (b), le format de l'un des registres descripteurs de segments intervenant dans l'ensemble de gestion de l'invention. Ce registre descripteur de segment comprend des éléments binaires DPB relatifs à l'adresse de base de la page dans laquelle se trouve le début du segment physique ou réel recherché en mémoire physique; il contient aussi des éléments binaires DSB relatifs à l'adresse de base du segment dans cette page réelle, et des éléments binaires DAM relatifs à la taille du segment auquel le processeur désire accéder. Ce registre comprend également des éléments binaires CTL de contrôle, qui permettent au processeur de vérifier si pour le segment considéré, le processeur doit bien fonctionner en mode local ou en mode global, ou s'il s'agit bien d'un segment concernant des opérations d'entrée-sortie.

La figure 1 représente en (c) le format du registre d'adresse réelle dans lequel l'ensemble de gestion de l'invention va ranger les éléments binaires relatifs à l'adresse physique du segment auquel le processeur désire accéder en mémoire. Ce registre contient tout d'abord la valeur binaire $P_0$ du décalage du début de segment par rapport au début de la page physique dans laquelle il est situé; ce registre contient également des éléments binaires PB relatifs à l'adresse de base du segment dans la page réelle ou physique. Enfin, il contient des éléments binaires PP relatifs au numéro de page physique dans laquelle se trouve le début du segment recherché. Comme sur les figures précédentes, les chiffres indiquent les nombres d'éléments binaires mis en jeu dans le registre.

Comme on le verra plus loin en détail, les registres descripteurs de segments forment une table en mémoire; dans un mode de réalisation particulier, cette table est constituée par 1024 registres comportant chacun 24 éléments binaires, et elle présente 256 entrées.

La figure 2 représente schématiquement un ensemble conforme à l'invention, permettant la gestion de la mémoire physique PM d'un processeur P. Cette gestion permet d'accéder à des instructions ou des données contenues en mémoire physique, lorsque cette mémoire est divisée en segments et en pages réels; chaque segment peut soit être contenu dans une page réelle, soit contenir plusieurs de ces pages. Cet accès se fait à partir d'une adresse virtuelle fournie par le processeur et dont le format a été donné à la figure 1a. L'ensemble de gestion comprend une table T de registres descripteurs de segments et des moyens qui seront décrits plus loin pour transformer une adresse virtuelle fournie par le processeur P, en une adresse physique d'un segment permettant l'exécution d'une tâche. L'ensemble de gestion comprend aussi un registre de base BA qui est chargé, pour chaque adresse virtuelle, par l'adresse de base du premier registre descripteur correspondant à la tâche à exécuter. Cette adresse de base est fournie par le superviseur du processeur P. La table T de registres descripteurs présente des entrées qui sont reliées aux sorties d'un additionneur logique OU1 qui reçoit, d'une part la valeur binaire de l'adresse de base du registre descripteur contenue dans le registre BA et, d'autre part, la valeur binaire de l'index VI de ce registre par rapport à l'adresse de base. De cette manière, l'addition de l'index VI avec l'adresse de base du registre descripteur, contenue dans le registre BA, permet de pointer l'une des entrées de la table T, en regard de laquelle se trouve le registre descripteur du segment concernant la tâche à exécuter, ou de pointer le premier des registres descripteurs des segments concernant cette tâche.

L'ensemble de gestion comprend aussi un registre de contrôle NBR, chargé par le superviseur du processeur P, par des valeurs binaires indiquant le nombre maximum de registres descripteurs mis en jeu dans la table T, pour l'exécution de la tâche considérée. Les sorties de ce registre de contrôle sont reliées aux entrées d'un comparateur COMP qui reçoit d'autre part, sur d'autres entrées, les valeurs binaires de l'index VI relatif au premier registre descripteur de segment de la tâche à exécuter. Le comparateur P fournit un signal d'erreur ER au processeur P, lorsque la valeur de l'index VI est supérieure au nombre de registres descripteurs mis en jeu dans l'exécution de la tâche. En effet, il est probable dans ce cas, que la valeur de l'index contenu dans l'adresse virtuelle fournie par le processeur, est erronée.

Le pointage du registre descripteur de segments concernant la tâche à exécuter, étant effectué, l'ensemble de gestion, qui sera décrit plus loin en détail, va fonctionner de la manière suivante: les éléments binaires $P_0$ de poids faible de l'adresse virtuelle (9-0) passent sans être modifiés, dans un registre d'adresse réelle RAR de la mémoire physique PM, qui peut ainsi être adressée grâce à des moyens connus (non représentés). Les éléments binaires DSB contenus dans le registre descripteur de segment et qui indiquent l'adresse de base du segment réel, passent directement dans le registre d'adresse réel RAR, sans être modifiés. Ces éléments binaires de poids fort, sont désignés par PB sur cette figure et sur la figure 1c. Avant d'obtenir le numéro de page physique ou réelle PP, dans lequel se trouve le début du segment réel à adresser, on vérifie, grâce à des moyens constitués par une porte ET1, que l'adresse virtuelle VP de la page dans laquelle se trouve le début du segment à adresser, n'excède pas la taille DAM du segment, cette taille étant formée par les éléments binaires contenus dans le registre descripteur décrit plus haut. La porte ET1 permet en fait d'effectuer l'opération logique VP. DAM qui doit être égale à 0 si le numéro de page virtuelle n'excède pas la taille du segment à exécuter. En effet, si l'adresse virtuelle dépasse la taille du segment à exécuter, c'est qu'une erreur s'est produite dans le pointage du registre descripteur. Dans ce cas, la valeur binaire 1 fournie par la porte ET est appliquée au processeur pour indiquer cette erreur.

Après cette vérification, le numéro de page réelle PP dans laquelle se trouve le début du segment à adresser est formé par une porte logique OU2, à partir du numéro de base de page physique DPB et du numéro de page virtuelle VP. En fait, la porte OU2 réalise l'opération PP = VP + DPB. Le registre d'adresse réelle RAR contient alors toutes les informations nécessaires à l'adressage du segment réel en mémoire physique PM. En effet, il contient l'adresse de base PB du segment réel, le numéro de page physique PP dans lequel se trouve le début de ce segment et le décalage PO du début de ce segment par rapport au début de la page physique.

Les opérations qui viennent d'être décrites et qui permettent, d'une part de vérifier que le numéro de page virtuelle est inférieur à la taille du segment réel à adresser et, d'autre part, de calculer le numéro de page réelle à partir du numéro de page virtuelle et de l'adresse de base de cette page réelle, s'effectuent très rapidement grâce à des portes logiques; ces portes remplacent des opérateurs effectuant des opérations complexes dans des ensembles de gestion connus. Ces ensembles connus utilisent en effet des additionneurs ou des comparateurs qui rendent ces opérations compliquées.

On va maintenant donner un exemple de gestion d'adresse effectuée dans l'ensemble de l'invention.

On suppose que le processeur fournit l'adresse virtuelle suivante, dans une base hexadécimale:

$$VI = segment\ 3 — VP = page\ 10,$$
$$(OAH) — PO\ (décalage) = 257,$$

ainsi que les éléments binaires utilisateur U et donnée D.

On suppose que le registre descripteur de segment, pour le segment 3 "utilisateur" et "donnée" contient les éléments binaires suivants:

$$DSB1, DAM = 30H, DPB = 20H,$$

exprimés dans une base hexadécimale.

L'adresse physique après traduction est la suivante:

$$PP1, PP = 2AH, PO = 257.$$

On peut constater que l'adresse virtuelle a été acceptée car le résultat de l'opération:

$$VP.DAM = 30H \times OAH = 0.$$

Le numéro de page réelle PP est obtenu en effectuant la somme

$$VP + DPB = OAH + 2OH = 2AH$$

dans une base hexadécimale.

Dans l'ensemble de gestion qui vient d'être décrit, il est possible d'étendre la taille maximale des segments descripteurs; dans un exemple de réalisation qui n'est pas représenté ici, la taille de ces segments descripteurs est de 32 e.b. Cette extension de la dimension des segments descripteurs permet d'ajouter des éléments binaires de contrôle supplémentaires, et notamment, des éléments binaires de contrôle de parité.

L'invention permet bien d'atteindre les buts mentionnés plus haut et notamment, de réaliser un ensemble de gestion utilisant un très faible nombre de composants. Ces composants logiques sont tous intégrables facilement sous boîtier. Cet ensemble permet également de gérer séparément les espaces entrée-sortie et les espaces local-commun. Enfin, elle offre la possibilité de gérer des registres de segmentation dont le nombre est très important (1024) et qui présentent des segments de longueur importante (entre 1K octet et 16M octets). Les segments superviseur-utilisateur peuvent être séparés physiquement, de même que les segments instructions et données. Il en résulte une protection efficace des espaces mémoire, tandis que la présence d'un additionneur logique diminue de manière très importante le temps de réponse de cet ensemble, par rapport aux ensembles de gestion connus (<100ns).

## Revendications

1. Ensemble de gestion, par pagination et segmentation, de la mémoire physique d'un processeur, comprenant une table (T) de registres descripteurs de segments, reliée au processeur (P) et à des moyens pour transformer une adresse virtuelle fournie par le processeur en une adresse physique pour permettre l'exécution d'une tâche, à partir de segments et de pages réels contenus en mémoire physique (PM), cette adresse virtuelle contenant au moins un numéro de page virtuelle (VP), la valeur binaire d'un index de pointage (VI) du premier registre descripteur d'un segment physique en mémoire correspondant à une tâche à exécuter, et la valeur du décalage (PO) du début du segment physique, par rapport au début de la page réelle correspondante, un registre de base (BA) qui est chargé, pour chaque adresse virtuelle, par l'adresse de base du premier registre descripteur correspondant à la tâche à exécuter, les tâches à exécuter comportant des nombres différents de registres descripteurs, cette adresse de base étant chargée par le superviseur (P), la table (T) de registres descripteurs présentant des entrées qui sont reliées aux sorties d'un additionneur logique (OU1) qui reçoit d'une part la valeur binaire de l'adresse de base du premier registre descripteur et, d'autre part, la valeur binaire de l'index (VI) correspondant à ce registre, les sorties de l'additionneur pointant l'une des entrées de la table (T) de registres descripteurs, chaque registre descripteur contenant aussi des valeurs binaires relatives au moins à l'adresse de base (DSB) du segment physique, à la base de la page (DPB) dans laquelle est contenu le début de ce segment, ainsi que des valeurs binaires représentant la taille (DAM) du segment physique, caractérisé en ce que l'un des registres descripteurs de la table (T) contient des éléments binaires de contrôle (CTL) chargé par le processeur et qui permettent à celui-ci de vérifier si pour le segment auquel le processeur doit accéder, ce processeur doit fonctionner en mode local ou global, s'il doit traiter une opération d'entrée-sortie ou un accès à la mémoire, l'ensemble de gestion comprenant des moyens constitués par une porte "OU" (OU2) reliée à la table et au processeur pour former l'adresse physique (PP) de la page dans laquelle se trouve le début du segment physique, à partir du numéro de page virtuelle (VP) et de la valeur de la base de la page (DPB), des moyens constitués par une porte ET reliée à la table et au processeur, pour vérifier que le numéro de page virtuelle (VP) n'excède pas la taille (DAM) du segment à exécuter, un registre de contrôle (NBR) chargé par le superviseur, par des valeurs binaires indiquant le nombre maximum de registres descripteurs mis en jeu dans l'exécution de ladite tâche, et un comparateur (COMP) relié au processeur (P) et au registre de contrôle (NBR), pour comparer les valeurs binaires contenues dans le registre de contrôle (NBR) et les valeurs binaires de l'index (VI), ce comparateur appliquant un signal d'erreur (ER) au processeur (P) lorsque la valeur de l'index (VI) est supérieure au nombre de registres descripteurs mis en jeu dans l'exécution de la tâche.

2. Ensemble de gestion selon la revendication 1, caractérisé en ce que l'additionneur logique est une porte "OU".

**Patentansprüche**

1. Steuerungsaufbau des physikalischen Speichers eines Prozessors durch Paginierung und Segmentierung mit einer Tafel (T) für Segmentbeschreibungsregister, die mit dem Prozessor (P) und mit Vorrichtungen zum Unwandeln einer von dem Prozessor erzeugten, virtuellen Adresse in eine physikalische Adresse verbunden sind, um die Durchführung einer Aufgabe ausgehend von reellen Segmenten und Seiten im physikalischen Speicher (PM) zu ermöglichen, wobei diese virtuelle Adresse wenigstens eine virtuelle Seitennummer (VP), den binären Wert eines Zeigerindex (VI) des ersten Beschreibungsregisters eines physikalischen Segments im Speicher, das einer durchzuführenden Aufgabe entspricht, und den Verschiebewert (PO) des Anfangs des physikalischen Segments bezüglich des Beginns der entsprechenden, reellen Seite und ein Basisregister (BA), das für jede virtuelle Adresse mit der der durchzuführenden Aufgabe entsprechenden Basisadresse des ersten Beschreibungsregisters geladen wird, umfaßt, wobei die durchzuführenden Aufgaben verschiedene Zahlen von Beschreibungsregistern umfassen, wobei diese Basisadresse durch den Überwacher (P) geladen wird, wobei die Tafel (T) für Beschreibungsregister Eingänge aufweist, die mit den Ausgängen eines logischen Addierers (OU1), der auf der einen Seite den binären Wert der Basisadresse des ersten Beschreibungsregisters und, auf der anderen Seite, den binären Wert des diesem Register entsprechenden Index (VI) erhält, verbunden sind, wobei die Ausgänge des Addierers auf einen der Eingänge der Tafel (T) der Beschreibungsregister zeigen, wobei jedes Beschreibungsregister außerdem binäre Werte bezüglich wenigstens der Basisadresse (DSB) des physikalischen Segments, bezüglich der Seitenbasis (DPB) in der der Beginn dieses Segments enthalten ist, ebenso wie binäre Werte enthält, die die Größe (DAM) des physikalischen Segments darstellt, dadurch gekennzeichnet, daß das eine der Beschreibungsregister der Tafel (T) binäre Steuerungselemente (CTL) enthält, die vom Prozessor geladen werden und die diesem ermöglichen, zu überprüfen, ob der Prozessor für das Segment, das er ansprechen muß, im lokalen oder globalen Modus arbeiten muß, wenn er eine Eingangs-Ausgangsoperation oder einen Speicherzugriff durchführen soll, wobei der Steuerungsaufbau Vorrichtungen umfaßt, die aus einem "ODER"-Gatter (OU2) bestehen, das mit der Tafel und dem Prozessor verbunden ist, um die physikalische Adresse (PP) der Seite zu bilden, auf der sich der Anfang des physikalischen Segments befindet, ausgehend von der virtuellen Seitennummer (VP) und dem Basiswert der Seite (DPB), wobei diese Vorrichtungen aus einem UND-Gatter, das mit der Tafel und dem Prozessor verbunden ist, um zu überprüfen, daß die Nummer der virtuellen Seite (VP) nicht die Größe (DAM) des auszuführenden Segments überschreitet, einem Steuerungsregister (NBR), das von dem Überwacher mit binären Werten geladen wird, die die maximale Zahl der Beschreibungsregister, die bei der Durchführung der Aufgabe in Spiel gebracht werden, angeben, und aus einem Komparator (COMP) bestehen, der mit dem Prozessor (P) und dem Steuerungsregister (NBR) verbunden ist, um die in dem Steuerungsregister (NBR) enthaltenen binären Werte mit den binären Werten des Index (VI) zu vergleichen, wobei dieser Komparator ein Fehlersignal (ER) an den Prozessor (P) anlegt, wenn der Wert des Index (VI) über der Zahl der bei der Durchführung der Aufgabe in Spiel gebrachten Beschreibungsregister liegt.

2. Steuerungsaufbau nach Anspruch 1, dadurch gekennzeichnet, daß der logische Addierer ein "ODER"-Gatter ist.

**Claims ·**

1. Management system, by pagination and segmentation, of the physical memory of a processor, incorporating a table (T) of segment descriptive registers connected to the processor (P) and the means for transforming a virtual address supplied by the processor into a physical address in order to permit the performance of a task, on the basis of real pages and segments contained in a physical memory (PM), said virtual address containing at least one virtual page (VP) number, the binary value of a checking index (VI) of the first descriptive register of a physical segment in the memory corresponding to a task to be performed, and the offset (PO) value of the start of the physical segment, with respect to the start of the corresponding real page, a base register (BA) which is loaded, for each virtual address, by the base address of the descriptive register corresponding to the task to be performed. The tasks to be performed consisting of different numbers of descriptive registers, said base address being loaded by the supervisor (P), the table (T) of descriptive registers having inputs connected to the outputs of a logic adder (OU1), which receives on the one hand the binary value of the base address of the first descriptive register and on the other hand the binary value of the index (VI) corresponding to said register, the outputs of the adder checking one of the inputs of the table (T) of descriptive registers, each descriptive register also containing binary values relative at least to the base address (DSB) of the physical segment, at the bottom of the page (DPB) in which is contained the start of said segment, as well as the binary values representing the size (DAM) of the physical segment, characterized in that one of the descriptive registers of the table contains binary control elements (CTL) loaded by the processor and enabling the latter to establish whether for the segment to which the processor must have access said processor must operate in the local or overall mode if it has to deal with an input-output operation or an access to the memory, the management system having means constituted by an OR gate (OU2) connected to the table and to the processor for forming the physical address (PP) of the page in which is located the start of the physical segment, on the basis of the virtual page (VP) number and the value of the bottom of the page (DPB), means constituted by an AND gate connected to the table and to the processor to establish whether the virtual page (VP) number exceeds the size (DAM) of the segment to be carried out, a control register (NBR) loaded by the supervisor, by binary values indicating the maximum number of descriptive registers used in the performance of said task and a comparator (COMP) connected to the processor (P) and to the control register (NBR), in order to compare the binary values contained in the control register (NBR) and the binary values of the index (VI), said comparator applying an error signal (ER) to the processor (P) when the value of the index (VI) exceeds the number of descriptive registers used in the performance of the task.

2. Management system according to claim 1, characterized in that the logic adder is an OR gate.

EP 0 078 229 B1

FIG.1

| | 25 | 23 | | 15 | | 9 | | 0 |
|---|---|---|---|---|---|---|---|---|
| a | U-S | FD | VI | | VP | | PO | |

| | 23 | | 15 | | 9 | | 3 | 0 |
|---|---|---|---|---|---|---|---|---|
| b | DSB | | DAM | | DPB | | CTL | |

| | 23 | | 15 | | 9 | | | 0 |
|---|---|---|---|---|---|---|---|---|
| c | PB | | PP | | PO | | | |

FIG.2